(19)

**Europäisches Patentamt**
**European Patent Office**
**Office européen des brevets**

(11) **EP 4 005 364 B1**

(12) **EUROPÄISCHE PATENTSCHRIFT**

(45) Veröffentlichungstag und Bekanntmachung des Hinweises auf die Patenterteilung:
**29.05.2024  Patentblatt 2024/22**

(21) Anmeldenummer: **21195443.3**

(22) Anmeldetag: **08.09.2021**

(51) Internationale Patentklassifikation (IPC):
*A01D 41/02* (2006.01)  *A01D 41/127* (2006.01)
*B60K 28/10* (2006.01)  *B60K 28/16* (2006.01)
*B60W 30/18* (2012.01)

(52) Gemeinsame Patentklassifikation (CPC):
**B60W 30/18172; A01D 41/1274; B60K 6/12; B60K 6/46; B60K 6/52; B60K 28/10; B60K 28/165; B60T 8/1769;** A01D 41/02; B60W 2300/158

(54) **VERFAHREN ZUM BETRIEB EINER SELBSTFAHRENDEN ERNTEMASCHINE**

METHOD FOR OPERATION OF A SELF-PROPELLED HARVESTER

PROCÉDÉ DE FONCTIONNEMENT D'UN ENGIN D'ABATTAGE-FAÇONNAGE AUTOMOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2020  DE 102020131494**

(43) Veröffentlichungstag der Anmeldung:
**01.06.2022  Patentblatt 2022/22**

(73) Patentinhaber: **CLAAS Selbstfahrende Erntemaschinen GmbH**
**33428 Harsewinkel (DE)**

(72) Erfinder:
• **Look, Stefan**
**48231 Warendorf (DE)**
• **Meyer zu Hörste, Jan**
**49214 Bad Rothenfelde (DE)**
• **Heitmann, Christoph**
**48231 Warendorf (DE)**
• **Bönig, Ingo**
**33330 Gütersloh (DE)**
• **Stremlau, Björn**
**49509 Recke (DE)**

(74) Vertreter: **CLAAS Gruppe**
**Mühlenwinkel 1**
**33428 Harsewinkel (DE)**

(56) Entgegenhaltungen:
**US-A- 5 323 870**   **US-A1- 2004 059 493**
**US-A1- 2020 122 730**   **US-B2- 8 229 640**

**Beschreibung**

Die vorliegende Anmeldung betrifft ein Verfahren zum Betrieb einer selbstfahrenden Erntemaschine gemäß dem Oberbegriff von Anspruch 1.

Die Erntemaschine, die insbesondere von einem selbstfahrenden Mähdrescher oder einen selbstfahrenden Feldhäcksler gebildet sein kann, verfügt über eine Antriebskraftmaschine, mittels der eine Antriebskraft bereitgestellt wird. Bei der Antriebskraftmaschine kann es sich insbesondere um eine Verbrennungskraftmaschine, beispielsweise einen Dieselmotor, handeln. Die Erntemaschine umfasst weiterhin eine vordere Triebachse sowie eine hintere Lenktriebachse. Die beiden Achsen wirken in aller Regel jeweils mit zwei Rädern zusammen, wobei die vordere Triebachse mit zwei Vorderrädern und die hintere Lenktriebachse mit zwei Hinterrädern zusammenwirken. Die hintere Lenktriebachse ist lenkbar ausgestaltet.

Die Erntemaschine umfasst weiterhin eine Kraftverteileinrichtung, mittels der die von der Antriebskraftmaschine bereitgestellte Antriebskraft auf die Triebachse und die Lenktriebachse verteilt werden kann. Die Verteilung kann insbesondere derart erfolgen, dass die gesamte Antriebskraft auf die Triebachse geleitet wird, sodass die Erntemaschine in einer Zweiradbetriebsweise betrieben wird. Alternativ ist es möglich, die Antriebskraft zumindest zum Teil auf die Lenktriebachse zu verteilen, sodass im Ergebnis sowohl der Triebachse als auch der Lenktriebachse jeweils ein Teil der gesamten Antriebskraft zugeleitet wird. Die Erntemaschine befindet sich dann in einer Allradbetriebsweise, bei der sowohl die Vorderräder als auch die Hinterräder aktiv angetrieben werden. Die Erntemaschine kann insbesondere über ein Strömungsgetriebe verfügen, mittels dessen die von der Antriebskraftmaschine bereitgestellte Antriebskraft auf die Triebachse und/oder die Lenktriebachse verteilt wird. Zu diesem Zweck kann die Erntemaschine insbesondere mindestens eine zentrale Hydraulikpumpe aufweisen, während die Triebachse und die Lenktriebachse jeweils mit einem Hydromotor zusammenwirken. Eine Verteilung der Antriebskraft auf die Triebachse und die Lenktriebachse kann bei einer solchen Ausgestaltung besonders einfach erfolgen, indem mittels der Hydraulikpumpe komplementäre Anteile eines gesamten mittels der Hydraulikpumpe bereitgestellten Antriebsdrucks zur Verfügung gestellt werden, wobei bereitgestellte hydraulische Energie insbesondere an der Triebachse bzw. der Lenktriebachse mittels Hydromotoren in mechanische Energie umgewandelt werden kann.

Die Erntemaschine umfasst weiterhin Mittel zur Ermittlung von Schlupfwerten sowohl an der Triebachse als auch an der Lenktriebachse. Diese sind dazu geeignet, Messwerte zu erheben, anhand derer sich ein jeweiliger Schlupfwert bzw. Schlupf an der Triebachse bzw. der Lenktriebachse ermitteln lässt. Beispielsweise können derartige Mittel von Drehzahlsensoren gebildet sein, sodass zur Ermittlung eines jeweiligen Schlupfwerts eine Umfangsgeschwindigkeit eines jeweiligen Rades, beispielsweise ein Vorderrad bei der Ermittlung eines Schlupfwerts der Triebachse, gemeinsam mit einer tatsächlichen Fahrgeschwindigkeit der Erntemaschine ausgewertet wird. Hierbei kann der Schlupf beispielsweise dadurch beschrieben werden, dass die Differenz aus Umfangsgeschwindigkeit des Rades und der tatsächlichen Fahrgeschwindigkeit der Erntemaschine mit der Umfangsgeschwindigkeit des Rades ins Verhältnis gesetzt wird. Wenn beispielsweise die tatsächliche Fahrgeschwindigkeit v der Erntemaschine 10 % unterhalb der Umfangsgeschwindigkeit u des jeweiligen Rades liegt, ergibt sich der Schlupfwert entsprechend zu $(1{,}0\,u - v)\,/\,1{,}0\,u = (1{,}0\,u - 0{,}9\,u)\,/\,U = 0{,}1\,u\,/\,u = 0{,}1$.

Die Steuerung von Allradantrieben, die typischerweise vom Maschinenführer der jeweiligen Erntemaschine vorgenommen wird, hat sich in der Praxis wiederholt als problematisch herausgestellt. Dies betrifft sowohl die Aktivierung bzw. Deaktivierung des Allradantriebs als solchem als auch die Verteilung der Antriebskraft auf die Triebachse und die Lenktriebachse. Hierbei bewegt sich der Allradantrieb in dem Spannungsfeld, dass er aktiviert sein sollte, um eine Steckenbleiben der Erntemaschine sicher zu vermeiden. Gleichzeitig sollte der Allradantrieb nicht dauerhaft aktiv sein, wenn dies aus den Randbedingungen heraus nicht erforderlich ist. Insbesondere kann es nämlich bei Verwendung des Allradantriebs zu einer ungewünschten Zerstörung der Grasnarbe kommen, was insbesondere in hügeligem Gelände problematisch sein kann.

Eine Lösung zur Bereitstellung einer automatisierten Regelung zur Zu- und Abschaltung des Allradantriebs einer Erntemaschine ist der deutschen Patentanmeldung DE 196 47 507 A1 entnehmbar. Diese beschreibt die Berücksichtigung von Achslastverteilungen und Schlupfwerten. Hieraus wird ein Wirkungsgrad des Fahrwerks berechnet, der schließlich zur Steuerung der Allradfunktion zum verwendet wird.

Weiterhin beschreibt die deutsche Patentanmeldung DE 10 2007 030 168 A1 eine Regelung, mittels der die Antriebskraft bei aktiviertem Allradantrieb auf die Triebachse und die Lenktriebachse verteilt wird. Hierbei werden unter anderem die Bodenbeschaffenheit, die Neigung des Untergrunds und/oder mindestens ein Schlupfwert berücksichtigt. Des Weiteren offenbart die US 2020/122730 A1 ein Fahrzeug das zwischen Zweirad- und Allradbetriebsweise umschaltbar ist.

Der vorliegenden Anmeldung liegt die Aufgabe zugrunde, ein Verfahren zum Betrieb einer landwirtschaftlichen Erntemaschine bereitzustellen, mittels dessen der Maschinenführer bei der Steuerung des Allradantriebs der Erntemaschine entlastet wird.

Die zugrunde liegende Aufgabe wird erfindungsgemäß mittels des Verfahrens mit den Merkmalen des Anspruchs 1 gelöst. Vorteilhafte Ausgestaltungen ergeben sich aus den zugehörigen Unteransprüchen.

Das erfindungsgemäße Verfahren ist betreffend die Umschaltung zwischen der Zweiradbetriebsweise und der Allradbetriebsweise dadurch gekennzeichnet, dass diese automatisch in Abhängigkeit von Schlupfwerten an der Triebachse und/oder der Lenktriebachse stattfindet. Weiterhin sieht das erfindungsgemäße Verfahren vor, dass, sofern die Erntemaschine in der Allradbetriebsweise betrieben wird, die Verteilung der Antriebskraft der Verbrennungskraftmaschine auf die Triebachse und die Lenktriebachse in Abhängigkeit von Schlupfwerten an der Triebachse und/oder der Lenktriebachse automatisiert geregelt wird.

Das erfindungsgemäße Verfahren hat viele Vorteile. Insbesondere ist der Maschinenführer davon entlastet, die Aktivierung und/oder Deaktivierung der Allradbetriebsweise vorzunehmen, wodurch insbesondere die Beobachtung äußerer Umstände entfallen kann, anhand derer er die Entscheidung für die Aktivierung bzw. Deaktivierung vornehmen müsste. Dieser Vorgang findet stattdessen anhand objektivierter Umstände statt, sodass ein womöglich unnötiges Aktivieren der Allradbetriebsweise ebenso vermieden wird wie ein zu spätes Aktivieren derselben. Im Ergebnis kommt es mittels des erfindungsgemäßen Verfahrens folglich zu einer geringeren Gefahr des Steckenbleibens bei gleichzeitig geringerer Gefahr der Zerstörung der Grasnarbe sowie geringerem Verbrauch von Betriebsstoffen. Letzterer steigt insbesondere dann an, wenn eine Allradbetriebsweise unnötigerweise aktiviert ist.

Der Maschinenführer ist weiterhin während der Allradbetriebsweise davon entlastet, die Verteilung der Antriebskraft in sinnvoller Weise auf die Triebachse und die Lenktriebachse vorzunehmen. Die Verteilung der Antriebskraft aufgrund von Beobachtungen bedarf einer besonders ausgeprägten Erfahrung des Maschinenführers sowie einer hohen Konzentration während des Erntegeschehens. Die automatisierte Regelung in Abhängigkeit von Schlupfwerten entlastet den Maschinenführer von dieser Aufgabe und führt gleichzeitig zu wiederholbaren Ergebnissen unabhängig von sonstigen Randbedingungen. Das Auftreten von übermäßigem Schlupf an der Triebachse und/oder an der Lenktriebachse wird hierdurch vermieden, wodurch insbesondere die Grasnarbe geschützt wird.

In einer vorteilhaften Ausgestaltung des erfindungsgemäßen Verfahrens besteht eine hinreichende Bedingung für die Umschaltung von der Zweiradbetriebsweise in die Allradbetriebsweise darin, dass über einen Messzeitraum hinweg an der Triebachse und/oder an der Lenktriebachse ein Schlupfwert ermittelt wird, der oberhalb eines Schlupfgrenzwerts liegt. Der Schlupfgrenzwert kann insbesondere zwischen 4 % und 8 %, vorzugsweise zwischen 5 % und 7 %, weiter vorzugsweise 6 %, betragen. Diese Art der Regelung sieht vor, dass bei Überschreitung des Schlupfgrenzwerts automatisch die Allradbetriebsweise aktiviert wird. Dies hat zur Folge, dass die Antriebskraft, die in der Zweiradbetriebsweise ausschließlich auf die Triebachse wirkt, zumindest teilweise auf die Lenktriebachse verteilt wird. Hierdurch wird die Neigung zum Auftritt eines Schlupfs an der Triebachse verringert. Insbesondere wird der sogenannte Kraftschlussbeiwert an der Triebachse reduziert, der sich aus dem Verhältnis der an der Triebachse wirkenden Antriebskraft zu einer Normalkraft an der Triebachse ergibt. Die Normalkraft beschreibt dabei diejenige Kraft, die an den Vorderrädern der Triebachse senkrecht zum Untergrund wirkt. Der Kraftschlussbeiwert ist entsprechend geringer, desto größer die Normalkraft an der Triebachse ist. Da sich entsprechend die Reibung zwischen den Vorderrädern und dem Untergrund erhöht, ist ein "Durchdrehen" bzw. "Durchrutschen" der Vorderräder weniger einfach möglich, sodass die Neigung zum Auftreten eines Schlupfs abnimmt. Dasselbe gilt bei einer Reduzierung der Antriebskraft, die über die Vorderräder in den Untergrund eingetragen werden muss. Letztgenannten Effekt macht man sich bei der Umschaltung auf die Allradbetriebsweise zunutze, sobald ein Schlupfwert oberhalb des Schlupfgrenzwerts ermittelt wird. Indem nämlich zumindest ein Teil der Antriebskraft von der Triebachse auf die Lenktriebachse umverteilt wird, sinkt der effektive Kraftschlussbeiwert und damit die Neigung zum Schlupf.

Neben einer Veränderung des über die jeweilige Achse abzutragenden Teils der Antriebskraft kann es ferner zu einer Veränderung der effektiv wirkenden Normalkraft kommen. Dies erfolgt typischerweise weniger infolge einer Veränderung der gesamten Gewichtskraft der Erntemaschine als infolge einer Verlagerung der Gewichtskraft, insbesondere beim Auftritt von Beschleunigungen. Somit wird beispielsweise bei einer Beschleunigung der Erntemaschine aus dem Stillstand aufgrund der wirkenden Massenträgheit die Gewichtskraft der Erntemaschine überproportional über die hintere Lenktriebachse in den Untergrund abgetragen, wodurch der Kraftschlussbeiwert der Lenktriebachse steigt und entsprechend mit ihm die Neigung zum Auftreten eines Schlupfs an der Lenktriebachse. Entsprechend kann es besonders vorteilhaft sein, wenn in einer Anfahrsituation, in der die Erntemaschine aus dem Stillstand beschleunigt, die Erntemaschine zumindest Initial in der Zweiradbetriebsweise betrieben wird. Hierbei wird die vordere Triebachse mit der gesamten Antriebskraft beaufschlagt.

Sobald es zu einer Umschaltung von der Zweiradbetriebsweise in die Allradbetriebsweise kommt, kann es besonders von Vorteil sein, einen Gesamtkraftschlussbeiwert zu ermitteln und vorzugsweise zu speichern. Dieser Gesamtkraftschlussbeiwert ergibt sich aus dem Verhältnis der gesamten Antriebskraft der Arbeitskraftmaschine im Moment der Umschaltung zu einer an der Triebachse wirkenden Normalkraft im Moment der Umschaltung. Mit anderen Worten beschreibt dieser Gesamtkraftschlussbeiwert den Kraftschlussbeiwert an der Triebachse, der an der Triebachse im Moment der Umschaltung auf die Allradbetriebsweise vorliegt. Da die Umschaltung auf die Allradbetriebsweise als Reaktion auf einen unerwünscht hohen Schlupf an der Triebachse vorgenommen werden sollte, ist es für die weitere automatische Regelung der Umschaltung zwischen Zweiradbetriebsweise und Allradbetriebsweise vorteilhaft, den Gesamtkraftschlussbeiwert im Moment der Umschaltung in die Allradbetriebsweise zu kennen und für zukünftige Auswertungen und damit einhergehend eine genauere Steuerung der Umschaltung heranzuziehen. Entsprechend ist es besonders von Vorteil, wenn der ermittelte Gesamtkraftschlussbeiwert auf einer Speichereinheit der Erntemaschine gespeichert wird.

Sofern der Gesamtkraftschlussbeiwert ermittelt wird, kann es weiterhin besonders von Vorteil sein, wenn ferner ein Grenzkraftschlussbeiwert ermittelt und vorzugsweise gespeichert wird, der sich aus dem Gesamtkraftschlussbeiwert abzüglich eines festgelegten Pufferwerts ergibt. Dies folgt der Logik, dass die Zweiradbetriebsweise nur dann gewählt sein sollte, wenn es zu keinem nennenswerten Schlupf an der Triebachse kommt, der die Grasnarbe schädigen könnte. Entsprechend sollte ein Umschalten von der Allradbetriebsweise in die Zweiradbetriebsweise nicht vorgenommen werden, bevor der Gesamtkraftschlussbeiwert, bei dem ein solcher nennenswerter Schlupf festgestellt wurde, unterschritten ist. Um hier einen zusätzlichen Sicherheitspuffer vorzusehen, ist es von Vorteil, in der beschriebenen Weise von diesem Gesamtkraftschlussbeiwert, der im Moment der Umschaltung von der Zweirad- in die Allradbetriebsweise ermittelt wurde, den Pufferwert abzuziehen und auf diese Weise den Grenzkraftschlussbeiwert zu ermitteln. Dieser kann sodann später als notwendige Bedingung für die Umschaltung zurück von der Allradbetriebsweise in die Zweiradbetriebsweise herangezogen werden. Somit kann vermieden werden, dass "zu früh" in die Zweiradbetriebsweise gewechselt wird, die zu einem nennenswerten Schlupf an der Triebachse führen könnte. Dies könnte geschehen, wenn übrige Bedingungen für die Umschaltung von der Allradbetriebsweise in die Zweiradbetriebsweise als hinreichend angesehen würden, ohne den Vergleich des aktuellen Gesamtkraftschlussbeiwerts mit dem Grenzkraftschlussbeiwert heranzuziehen.

Eine solche übrige Bedingung könnte beispielsweise sein, dass ein Schlupfwert der Triebachse, der eine Differenz zwischen Umfangsgeschwindigkeiten der Räder der Triebachse und der Lenktriebachse mit der Umfangsgeschwindigkeit der Räder der Triebachse ins Verhältnis setzt ("Schlupfdifferenzwert Triebachse"), einen vorgegebenen Grenzwert unterschreitet, beispielsweise kleiner oder gleich 10 % ist. Eine weitere Bedingung könnte beispielsweise analog sein, dass ein Schlupfwert der Lenktriebachse, der eine Differenz zwischen Umfangsgeschwindigkeiten der Räder der Lenktriebachse und der Triebachse mit der Umfangsgeschwindigkeit der Räder der Lenktriebachse ins Verhältnis setzt ("Schlupfdifferenzwert Lenktriebachse"), einen vorgegebenen Grenzwert unterschreitet, beispielsweise kleiner oder gleich 10 % ist.

In einer weiterhin vorteilhaften Ausgestaltung des erfindungsgemäßen Verfahrens besteht eine notwendige Bedingung für die Umschaltung von der Allradbetriebsweise in die Zweiradbetriebsweise darin, dass gleichzeitig sowohl an der Triebachse als auch an der Lenktriebachse zumindest über einen Messzeitraum hinweg jeweils ein Schlupfwert ermittelt wird, der unterhalb eines jeweils festgelegten, vorzugsweise desselben, Schlupfgrenzwerts liegt. Die Schlupfwerte können dabei insbesondere wie die vorstehend dargelegten Werte "Schlupfdifferenzwert Triebachse" und "Schlupfdifferenzwert Lenktriebachse" definiert werden. Vereinfacht ausgedrückt kann bei dieser Ausgestaltung die Deaktivierung der Allradbetriebsweise erst dann vorgenommen werden, wenn an den Achsen im Vergleich keine wesentlichen Abweichungen in den Umfangsgeschwindigkeiten auftreten. Das Unterschreiten jeweiliger Schlupfgrenzwerte kann auch als hinreichende Bedingung für die Umschaltung von der Allradbetriebsweise in die Zweiradbetriebsweise definiert werden. Als Messzeitraum, über den hinweg der Schlupfwert, der zum Vergleich mit dem Schlupfgrenzwert herangezogen wird, ermittelt wird, kann ein Zeitraum von mindestens 0,5 Sekunden, vorzugsweise mindestens 0,75 Sekunden, vorzugsweise von 1,0 Sekunden, verwendet werden. Die Definition eines derartigen Messzeitraums hat den Vorteil, dass nicht bereits kurzzeitige Ausreißer bei der Ermittlung des Schlupfwerts eine steuerungstechnische Folge haben.

Als Schlupfgrenzwert für den "Schlupfdifferenzwert Triebachse" und/oder den "Schlupfdifferenzwert Lenktriebachse" kann insbesondere ein Wert zwischen 14 % und 6 %, vorzugsweise zwischen 12 % und 8 %, weiter vorzugsweise von 10 %, vorgesehen werden.

Sofern ein Grenzkraftschlussbeiwert ermittelt wird, ist ein solches Verfahren weiterhin besonders von Vorteil, bei dem zusätzlich zu der vorgenannten notwendigen Bedingung des Unterschreitens des jeweiligen Schlupfgrenzwerts für die Umschaltung von der Allradbetriebsweise in die Zweiradbetriebsweise ferner ein aktueller Gesamtkraftschlussbeiwert mit dem Grenzkraftschlussbeiwert verglichen wird, wobei als notwendige Bedingung für die Umschaltung von der Allradbetriebsweise in die Zweiradbetriebsweise verlangt wird, dass der Gesamtkraftschlussbeiwert den Grenzkraftschlussbeiwert unterschreitet. Hierbei ergibt sich der Gesamtkraftschlussbeiwert aus einem Verhältnis einer gesamten Antriebskraft der Antriebskraftmaschine zu der an der Triebachse wirkenden Normalkraft, wobei vorzugsweise sowohl die Antriebskraft als auch die Normalkraft jeweils über übereinstimmende Messzeiträume erfasst werden.

Vorteilhafterweise ist das Verfahren derart ausgebildet, dass die gleichzeitige Unterschreitung der Schlupfgrenzwerte sowohl an der Triebachse als auch an der Lenktriebachse sowie die Unterschreitung des Grenzkraftschlussbeiwert gemeinsam als hinreichend angesehen werden, um die Allradbetriebsweise zu deaktivieren und entsprechend zur Zweiradbetriebsweise umzuschalten.

Das erfindungsgemäße Verfahren weiter ausgestaltend ist vorgesehen, dass bei dem Betrieb der Erntemaschine in der Allradbetriebsweise eine hinreichende Bedingung für eine Vergrößerung eines Anteils der Antriebskraft, der auf die Lenktriebachse verteilt wird, darin besteht, dass zumindest über einen Messzeitraum hinweg der Triebachse eine Schlupfwert ermittelt wird, der oberhalb eines zuvor festgelegten Schlupfgrenzwerts liegt. Die Verteilung der Antriebskraft zwischen der Triebachse und der Lenktriebachse ist erforderlich, wenn trotz Aktivierung der Allradbetriebsweise weiterhin ein verhältnismäßig großer Schlupf an entweder der Triebachse oder der Lenktriebachse ermittelt wird. Die Verteilung der Antriebskraft von der einen auf die andere Achse folgt der Überlegung, dass an derjenigen Achse, an der ein nennenswerter Schlupf auftritt, die Antriebskraft reduziert werden sollte, um den effektiven Kraftschlussbeiwert und damit die Neigung zum Schlupf an der jeweiligen Achse zu reduzieren. Der hierfür vorgesehene Schlupfgrenzwert, anhand dessen eine derartige automatisierte Regelung der Verteilung der Antriebskraft vorgenommen wird, kann insbesondere zwischen 2 % und 6 %, vorzugsweise zwischen 3 % und 5 %, weiter vorzugsweise bei 4 %, liegen.

Die beschriebene Vorgehensweise sieht lediglich eine Überwachung des aktuellen Schlupfwerts an der Triebachse vor, wobei in Abhängigkeit des Schlupfwerts eine Verteilung der Antriebskraft verändert wird. Dies kann insbesondere im Sinne einer Erhöhung oder Verringerung des Anteils der Antriebskraft vorgenommen werden, der auf die Lenktriebachse entfällt. Alternativ oder zusätzlich ist es ebenso denkbar, dass an der Lenktriebachse ein Schlupfwert ermittelt und mit einem Schlupfgrenzwert verglichen wird, wobei in Abhängigkeit von diesem Vergleich, das heißt insbesondere einem Überschreiten oder Unterschreiten des Schlupfgrenzwerts, die Verteilung der Antriebskraft zwischen der Triebachse und der Lenktriebachse geändert wird. Das Überschreiten bzw. das Unterschreiten des jeweiligen Schlupfgrenzwerts kann dabei jeweils als hinreichende Bedingung für die Veränderung der Verteilung der Antriebskraft definiert werden.

Sofern die Erntemaschine in der eingangs beschriebenen Weise ein Strömungsgetriebe aufweist, bei dem eine zentrale Hydraulikpumpe zum Einsatz kommt, die mit der Antriebskraftmaschine gekoppelt ist, kann die Verteilung der Antriebskraft auf die Triebachse und die Lenktriebachse besonders einfach mittels einer Verteilung des Antriebsdrucks der Hydraulikpumpe auf Hydromotoren der Triebachse bzw. der Lenktriebachse erfolgen.

Die Erfindung ist nachstehend anhand eines Ausführungsbeispiels, das in den Figuren dargestellt ist, näher erläutert. Es zeigt:

Fig. 1: Ein schematischer Vertikalschnitt durch eine Erntemaschine,

Fig. 2: Eine schematische Darstellung eines Antriebsstrangs der Erntemaschine gemäß Figur 1,

Fig. 3: Ein Logikdiagramm einer Steuerung zur Umschaltung zwischen der Zweiradbetriebsweise und der Allradbetriebsweise der Erntemaschine gemäß Figur 1 und

Fig. 4: Ein Logikdiagramm einer Steuerung zur Verteilung der Antriebskraft zwischen einer Triebachse und einer Lenktriebachse der Erntemaschine gemäß Figur 1 bei Vorliegen desselben in ihrer Allradbetriebsweise.

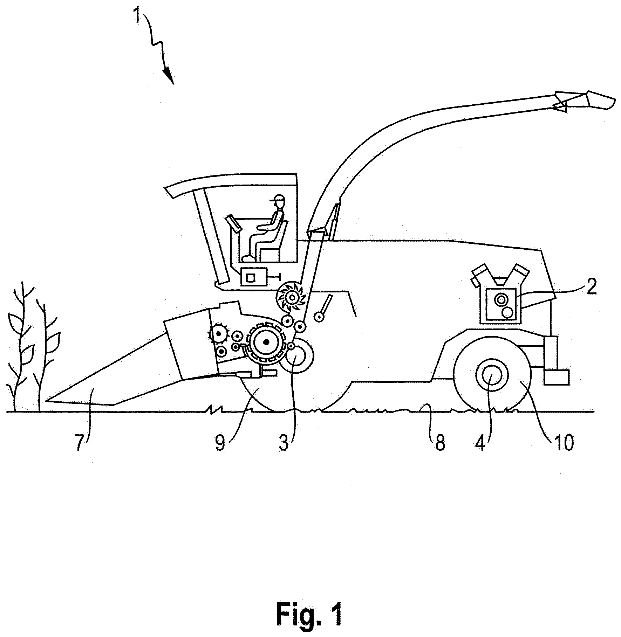

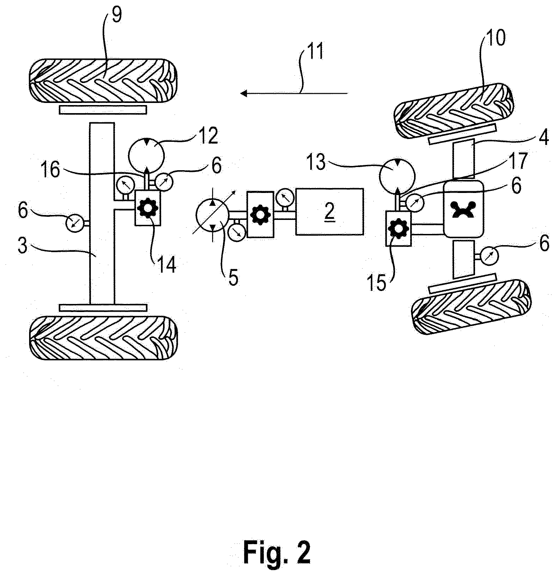

Ein Ausführungsbeispiel einer Erntemaschine 1, die gemäß dem erfindungsgemäßen Verfahren betreibbar ist, ist in den **Figuren 1 bis 4** veranschaulicht. Bei dieser Erntemaschine **1** handelt es sich um einen selbstfahrenden Feldhäcksler, der eine Antriebskraftmaschine **2** in Form eines Dieselmotors, eine vordere Triebachse **3** sowie eine hintere Lenktriebachse **4** umfasst. Die Triebachse **3** wirkt an ihren gegenüberliegenden Enden jeweils mit einem Vorderrad **9** zusammen. Analog wirkt die hintere Lenktriebachse **4** mit zwei lenkbaren Hinterrädern **10** zusammen. Die Erntemaschine **1** ist an ihrem vorderen Ende mit einem Maisgebiss **7** ausgestattet, mittels dessen Maispflanzen schneidbar sind. Um ein Feld abzuernten, bewegt sich die Erntemaschine **1** auf einem Untergrund **8** in eine Fahrtrichtung **11** vorwärts.

In dem gezeigten Beispiel verfügt die Erntemaschine **1** über ein Strömungsgetriebe, wobei eine mittels der Antriebskraftmaschine **2** bereitgestellte Antriebskraft, die zum Vortrieb der Erntemaschine **1** eingesetzt wird, an eine Kraftverteileinrichtung **5,** die hier in Form einer Hydraulikpumpe gebildet ist, geleitet wird. Die Kraftverteileinrichtung **5** steht mit zwei Hydromotoren **12, 13** in Wirkverbindung, wobei ein erster Hydromotor **12** mit der vorderen Triebachse **3** und der zweite Hydromotor **13** mit der hinteren Lenktriebachse **4** zusammenwirken. Mittels der Übertragung der gesamten Antriebskraft der Antriebskraftmaschine **2** auf die Triebachse **3** und/oder die Lenktriebachse **4** kann die Erntemaschine **1** in die Fahrtrichtung **11** angetrieben werden. Die Kraftübertragung an den Untergrund **8** erfolgt dabei mittels der Vorderräder **9** sowie der Hinterräder **10.**

Die Kraftverteileinrichtung **5** ist derart ausgebildet, dass sie einen gesamten Antriebsdruck, der infolge der von der Antriebskraftmaschine **2** bereitgestellten Antriebskraft zur Verfügung steht, in veränderlichem Verhältnis auf die beiden Hydromotoren **12, 13** verteilen kann. Auf diese Weise sind grundsätzlich zwei verschiedene Betriebsweisen der Erntemaschine **1** möglich, nämlich zum einen eine Zweiradbetriebsweise, bei der die gesamte Antriebskraft der Arbeitsmaschine **2** auf die vordere Triebachse **3** verteilt wird, und zum anderen eine Allradbetriebsweise, bei der die Antriebskraft anteilig auf die Triebachse **3** und die hintere Lenktriebachse **4** verteilt wird. Hierbei ist die Kraftverteileinrichtung **5** derart ausgebildet, dass die Verteilung der gesamten Antriebskraft auf die Triebachse **3** und die Lenktriebachse **4** während der Allradbetriebsweise veränderbar ist.

Die Erntemaschine **1** umfasst ferner Mittel **6** zur Ermittlung von Schlupfwerten an der Triebachse **3** und an der Lenktriebachse **4**. Diese Mittel **6** sind hier von Drehzahlsensoren gebildet, mittels derer Drehzahlen jeweils verbundener Wellen erfassbar sind. Die Art und Weise der Erfassung von Schlupfwerten erfolgt hier an der Triebachse **3** sowie gleichermaßen an der Lenktriebachse **4** wie folgt: Die von der Antriebskraftmaschine **2** zur Verfügung gestellte Antriebskraft wird mittels der Kraftverteileinrichtung **5** auf den jeweiligen Hydromotor **12, 13** verteilt. Mittels der Hydromotoren **12, 13** wird die mittels der Kraftverteileinrichtung **5** jeweils zugeleitete hydraulische Energie in mechanische Energie umgewandelt, sodass entsprechende Abtriebswellen **16, 17** angetrieben werden. Diese Abtriebswellen **16, 17**, von denen die erste mit dem ersten Hydromotor **12** und die zweite mit dem zweiten Hydromotor **13** zusammenwirken, sind jeweils mit einem Mittel **6** verbunden, mittels dessen die Drehzahl der jeweiligen Abtriebswelle **16, 17** erfasst wird. Nachgeschaltet befindet sich ein Getriebe **14, 15**, mittels dessen eine Übersetzung von der jeweiligen Abtriebswelle **16, 17** auf die Triebachse **3** bzw. Lenktriebachse **4** vorgenommen wird. Die Triebachse **3** und die Lenktriebachse **4** wirken ihrerseits ebenfalls jeweils mit einem Mittel **6** zusammen, mittels dessen die jeweilige Drehzahl erfasst wird. Für die Ermittlung der Schlupfwerte kann nunmehr sowohl an der Triebachse **3** als auch einer Lenktriebachse **4** eine Bahngeschwindigkeit eines Vorderrades **9** bzw. eines Hinterrades **10** ermittelt werden. Diese Bandgeschwindigkeit ergibt sich aus dem Zusammenhang zwischen Drehzahl der jeweiligen Abtriebswelle **16, 17**, Übersetzungsverhältnis zwischen der jeweiligen Abtriebswelle **16, 17** und der Triebachse **3** bzw. Lenktriebachse **4** sowie einem Radius des Vorderrades **9** bzw. des Hinterrades **10**. In Abwesenheit jeglichen Schlupfs ist die ermittelte Bahngeschwindigkeit identisch zu einer Fahrgeschwindigkeit der Erntemaschine **1**. Letztere wird gleichermaßen erfasst. Bei einem Auftreten eines Schlupfs ist die Bahngeschwindigkeit der Vorderräder **9** bzw. Hinterräder **10** größer als die tatsächliche Fahrgeschwindigkeit der Erntemaschine **1**. Wie eingangs bereits dargelegt, ergibt sich der Schlupf entsprechend aus der Differenz dieser Geschwindigkeiten in Verhältnis zur Bahngeschwindigkeit des jeweiligen Vorderrades **9** bzw. Hinterrades **10**.

Erfindungsgemäß verfügt die Erntemaschine **1** über eine automatisierte Umschaltung zwischen der Zweiradbetriebsweise und der Allradbetriebsweise, die in Abhängigkeit der ermittelten Schlupfwerte vorgenommen wird. Ferner verfügt die Erntemaschine **1** über eine automatische Regelung der Verteilung der Antriebskraft auf die Triebachse **3** und die Lenktriebachse **4** in Abhängigkeit der Schlupfwerte, während sich die Erntemaschine **1** in ihrer Allradbetriebsweise befindet.

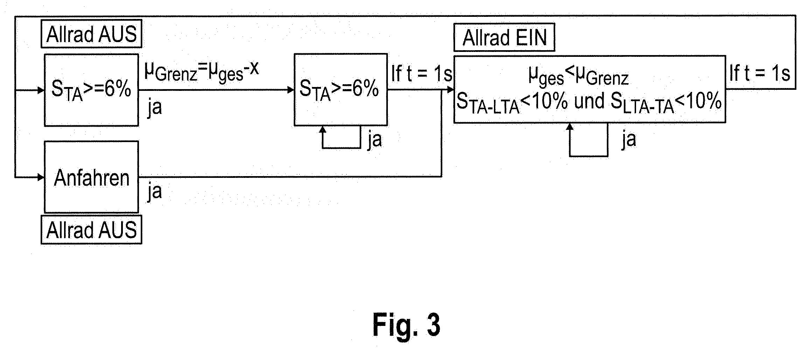

Die Regelungslogik, mit der die Umschaltung zwischen der Zweiradbetriebsweise und der Allradbetriebsweise vorgenommen wird, ist besonders gut anhand des Logikdiagramms gemäß **Figur 3** erkennbar.

Demgemäß ist in diesem Ausführungsbeispiel vorgesehen, dass die Erntemaschine **1** anfahrend aus dem Stillstand zunächst in der Zweiradbetriebsweise startet. Für die Aktivierung des Allradantriebs ist als Bedingung vorgesehen, dass an der Triebachse **3** ein Schlupfwert von größer oder gleich 6 % ermittelt wird, wobei dieser Schlupfwert in dem gezeigten Beispiel für mindestens einen Messzeitraum von hier 1 Sekunde vorliegen muss. Dies wird als hinreichende Bedingung definiert, infolge der von der Zweiradbetriebsweise auf die Allradbetriebsweise umgeschaltet wird. Sofern an der Triebachse **3** mithin ein Schlupfwert von weniger als 6 % vorliegt, bleibt die Zweiradbetriebsweise bestehen.

Sobald die Allradbetriebsweise aktiviert ist findet automatisiert eine Umschaltung zurück in die Zweiradbetriebsweise in dem gezeigten Beispiel lediglich dann statt, wenn drei notwendige Bedingungen kumuliert erfüllt sind. Hierfür werden zunächst fortlaufend zwei Schlupfwerte ermittelt. Der erste Schlupfwert ist der Schlupf an der Triebachse **3** in Bezug zur Umfangsgeschwindigkeit der Lenktriebachse **4** ("Schlupfdifferenzwert Triebachse"). Dieser Schlupfwert ist in **Figur 3** mit dem Kürzel $S_{TA-LTA}$ bezeichnet. Er wird durch das Inverhältnissetzen des Betrags der Differenz der Umfangsgeschwindigkeit der Hinterräder **10** an der Lenktriebachse **4** und der Umfangsgeschwindigkeit der Vorderräder **9** an der

Triebachse **3** zu der Umfangsgeschwindigkeit der Vorderräder **9** an der Lenktriebachse **3** ermittelt. Der Schlupfwert ergibt sich entsprechend wie folgt:

$$S_{TA-LTA} = (u_{TA} - u_{LTA}) / u_{TA}$$

mit:

$S_{TA-LTA}$ = Schlupfdifferenzwert Triebachse
$u_{TA}$ = Umfangsgeschwindigkeit an der Triebachse **3**
$u_{LTA}$ = Umfangsgeschwindigkeit an der Lenktriebachse **4**

Der zweite Schlupfwert ist der Schlupf an der Lenktriebachse **4** in Bezug zur Umfangsgeschwindigkeit der Triebachse **3** ("Schlupfdifferenzwert Lenktriebachse"). Analog zu vorstehender Formel ergibt sich besagter Schlupfwerts mithin wie folgt:

$$S_{LTA-TA} = (u_{LTA} - u_{TA}) / u_{LTA}$$

mit:

$S_{LTA-TA}$ = Schlupfdifferenzwert Lenktriebachse
$u_{TA}$ = Umfangsgeschwindigkeit an der Triebachse **3**
$u_{LTA}$ = Umfangsgeschwindigkeit an der Lenktriebachse **4**

Als erste notwendige Bedingung für die Umschaltung in die Zweiradbetriebsweise muss der erste Schlupfwert für einen Messzeitraum, der hier zu 1 Sekunde gewählt ist, kleiner als 10 % sein. Als zweite notwendige Bedingung muss der zweite Schlupfwert in demselben Messzeitraum ebenfalls kleiner als 10 % sein.

Die dritte notwendige Bedingung besteht in dem vorliegenden Beispiel darin, dass ein aktueller Gesamtkraftschlussbeiwert unterhalb eines Grenzkraftschlussbeiwert liegt. Der Gesamtkraftschlussbeiwert ergibt sich aus dem Verhältnis der gesamten Antriebskraft, die mittels der Antriebskraftmaschine **2** zur Verfügung gestellt wird, zu dem Anteil der Antriebskraft, der auf die Triebachse **3** entfällt. Entsprechend gilt:

$$\mu_{ges} = F_{ges} \,/\, F_{TA}$$

mit:

$\mu_{ges}$ = Gesamtkraftschlussbeiwert
$F_{ges}$ = gesamte Antriebskraft
$F_{TA}$ = Antriebskraft an Triebachse **3**

Der Grenzkraftschlussbeiwert ergibt sich aus einer Historie des Betriebs der Erntemaschine **1**. Er wird in dem Moment ermittelt, in dem die Bedingung bzw. Bedingungen für die Umschaltung von der Zweiradbetriebsweise in die Allradbetriebsweise in der Vergangenheit erfüllt war bzw. waren. In diesem Moment wurde der Gesamtkraftschlussbeiwert gemäß vorstehender Vorgehensweise ermittelt und ein Pufferwert abgezogen. Der Gesamtkraftschlussbeiwert im Moment der Erfüllung der Bedingungen für die Umschaltung von der Zweirad- in die Allradbetriebsweise bezeichnet den Kraftschlussbeiwert, bei dem ein definitionsgemäß zu großer Schlupf aufgetreten ist, sodass die Umschaltung in die Allradbetriebsweise als erforderlich angesehen wurde. Eine Umschaltung zurück in die Zweiradbetriebsweise - so die Logik der dritten notwendigen Bedingung - sollte entsprechend nur dann vorgenommen werden, wenn der aktuelle Gesamtkraftschlussbeiwert unterhalb demjenigen liegt, der im Moment der, vorzugsweise letztmaligen, Umschaltung zu der Allradbetriebsweise vorgelegen hat. Ansonsten wäre damit zu rechnen, dass abermals ein Schlupf an der Triebachse **3** auftritt, der den Betrieb der Erntemaschine **1** in der Allradbetriebsweise erforderlich macht. Die Umschaltung in die Zweiradbetriebsweise wäre dann nicht zielführend. Um die dritte Bedingung gewissermaßen "abzusichern" wird von dem Grenzkraftschlussbeiwert, der im Moment der Umschaltung von der Zweiradbetriebsweise in die Allradbetriebsweise ermittelt und gespeichert wurde, der beschriebene Pufferwert in Funktion als Sicherheitspuffer in Abzug gebracht. Für den Grenzkraftschlussbeiwert ergibt sich entsprechend:

$$\mu_{Grenz} = \mu_{ges} - x$$

mit:

$\mu_{Grenz}$ = Grenzkraftschlussbeiwert
$x$ = Pufferwert

Wenn die drei genannten Bedingungen kumuliert über einen gemeinsamen Messzeitraum, der hier zu 1 Sekunde gewählt ist, vorliegen, wird die Betriebsweise der Erntemaschine **1** automatisch ausgehend von der Allradbetriebsweise in die Zweiradbetriebsweise umgeschaltet.

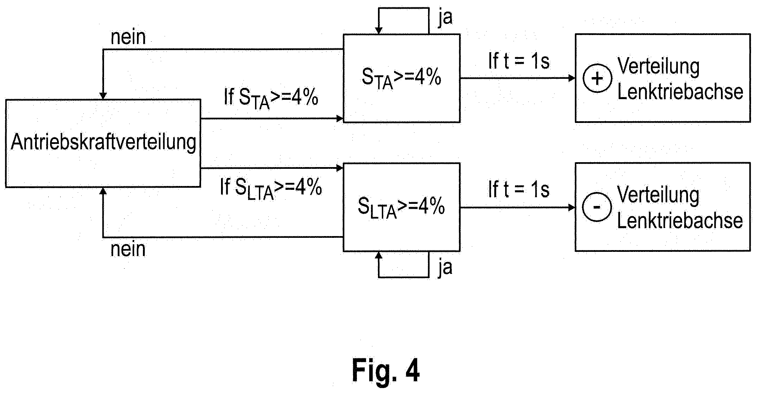

Sofern die Erntemaschine **1** in ihrer Allradbetriebsweise betrieben wird, verfügt sie ferner über eine automatische Verteilung der Antriebskraft auf die Triebachse **3** und die Lenktriebachse **4**. Eine beispielhafte Art und Weise, diese Verteilung automatisiert zu regeln, ergibt sich besonders gut anhand des Logikdiagramms gemäß **Figur 4**. Da die Verteilung der gesamten Antriebskraft der Antriebskraftmaschine **2,** die mittels der Kraftverteilungseinrichtung **5** vorgenommen wird, stets zu komplementären Anteilen auf die Triebachse **3** und die Lenktriebachse **4** vorgenommen wird, ist in dem gezeigten Beispiel für die Regelung lediglich vorgesehen, mehr oder weniger der Antriebskraft auf die Lenktriebachse **4** zu verteilen. Aus diesem Mehr oder Weniger ergibt sich automatisch reziprok ein entsprechendes Weniger oder Mehr der Antriebskraft an der Triebachse **3.**

Als Bedingung für die Umverteilung eines zusätzlichen Anteils der gesamten Antriebskraft auf die Lenktriebachse **4** ist in dem gezeigten Beispiel definiert, dass an der Triebachse **3** über einen Messzeitraum hinweg, der hier zu 1 Sekunde gewählt ist, ein Schlupfwert von größer oder gleich 4 % ermittelt wird. Letztgenannter Wert beschreibt hier einen Schlupfgrenzwert, der frei gewählt werden kann. Der Schlupfwert an der Triebachse **3** ergibt sich in der beschriebenen Weise aus dem Inverhältnissetzen der Umfangsgeschwindigkeit der Vorderräder **9** der Triebachse **3** abzüglich der tatsächlichen Fahrgeschwindigkeit der Erntemaschine **1** zu der Umfangsgeschwindigkeit der Vorderräder **9**. Es gilt mithin:

$$S_{TA} = (u_{TA} - v) \,/\, u_{TA}$$

mit:

$S_{TA}$ = Schlupfwert Triebachse **3**
$u_{TA}$ = Umfangsgeschwindigkeit an der Triebachse **3**
$v$ = Fahrgeschwindigkeit der Erntemaschine **1**

Umgekehrt kann als die Bedingung für die Umverteilung eines zusätzlichen Anteils der gesamten Antriebskraft auf die Triebachse **3** bzw. der Verringerung des Anteils der Antriebskraft an der Lenktriebachse **4** definiert sein, dass an der Lenktriebachse **4** über einen Messzeitraum hinweg, der hier 1 Sekunde beträgt, ein Schlupfwert $S_{LTA}$ von größer oder gleich 4 % vorliegt. Die Bestimmung des Schlupfwerts an der Lenktriebachse **4** erfolgt analog zu der vorstehenden Formel betreffend den Schlupfwert an der Triebachse **3**.

Die Logik der Erhöhung oder Verringerung des Anteils der Antriebskraft, der auf die Triebachse **3** bzw. die Lenktriebachse **4** entfällt, besteht darin, dass das Auftreten eines Schlupfs darauf zurückgeführt wird, dass die Antriebskraft in der jeweils betroffenen Achse größer ist, als mittels Reibung von den zugehörigen Rädern auf den Untergrund **8** übertragen werden kann. Um den Schlupf zu verringern, ist es daher sinnvoll, die Antriebskraft zu verringern, sodass eine maximale Haftreibung zwischen dem jeweiligen Rad und dem Untergrund unterschritten wird und kein oder lediglich ein geringer Schlupf auftritt.

**Bezugszeichenliste**

1 Erntemaschine
2 Antriebskraftmaschine
3 Triebachse
4 Lenktriebachse
5 Kraftverteileinrichtung
6 Mittel
7 Maisgebiss
8 Untergrund
9 Vorderräder
10 Hinterräder
11 Fahrtrichtung
12 Hydromotor
13 Hydromotor
14 Getriebe
15 Getriebe
16 Abtriebswelle
17 Abtriebswelle

**Patentansprüche**

1. Verfahren zum Betrieb einer selbstfahrenden Erntemaschine (1), die Erntemaschine (1) umfassend

   - eine Antriebskraftmaschine (2) zur Bereitstellung einer Antriebskraft,
   - eine vordere Triebachse (3),
   - eine hintere Lenktriebachse (4),
   - eine Kraftverteileinrichtung (5) zur Verteilung der Antriebskraft auf die Triebachse (3) und die Lenktriebachse sowie (4)
   - Mittel (6) zur Ermittlung von Schlupfwerten an der Triebachse (3) und der Lenktriebachse (4), wobei die Antriebskraft mittels der Kraftverteileinrichtung (5) dauerhaft zumindest zum Teil auf die Triebachse (3) und zumindest zeitweise zumindest zum Teil auf die Lenktriebachse (4) verteilt wird,

   umfassend die folgenden Verfahrensschritte:

   - Während einer Zweiradbetriebsweise wird die Antriebskraft ausschließlich auf die Triebachse (3) verteilt;
   - Während einer Allradbetriebsweise wird die Antriebskraft zum Teil auf die Triebachse (3) und zum Teil auf die Lenktriebachse (4) verteilt;

   **gekennzeichnet durch** die folgenden Verfahrensschritte:

   - Eine Umschaltung zwischen Zweiradbetriebsweise und Allradbetriebsweise findet automatisch in Abhängigkeit von Schlupfwerten an der Triebachse (3) und/oder der Lenktriebachse (4) statt;
   - Während der Allradbetriebsweise wird die Verteilung der Antriebskraft auf die Triebachse (3) und die Lenktriebachse (4) in Abhängigkeit von Schlupfwerten an der Triebachse (3) und/oder der Lenktriebachse (4) automatisiert geregelt.

2. Verfahren nach Anspruch 1, **dadurch gekennzeichnet, dass** in einer Anfahrsituation, in der die Erntemaschine (1) aus dem Stillstand beschleunigt, die Erntemaschine (1) zumindest initial in der Zweiradbetriebsweise betrieben wird.

3. Verfahren nach einem der vorhergehenden Ansprüche, **dadurch gekennzeichnet, dass** eine hinreichende Bedingung für die Umschaltung von der Zweiradbetriebsweise in die Allradbetriebsweise darin besteht, dass über einen Messzeitraum hinweg an der Triebachse (3) und/oder an der Lenktriebachse (4) ein Schlupfwert ermittelt wird, der oberhalb eines Schlupfgrenzwerts liegt.

4. Verfahren nach Anspruch 3, **dadurch gekennzeichnet, dass** der Schlupfgrenzwert zwischen 4 % und 8 %, vorzugsweise zwischen 5 % und 7 %, weiter vorzugsweise 6 %, beträgt.

5. Verfahren nach Anspruch 3 oder 4, **dadurch gekennzeichnet, dass** bei Umschaltung in die Allradbetriebsweise ein Gesamtkraftschlussbeiwert, der der sich aus dem Verhältnis der gesamten Antriebskraft im Moment der Umschaltung zu einer an der Triebachse (3) wirkenden Normalkraft im Moment der Umschaltung ergibt, ermittelt wird.

6. Verfahren nach Anspruch 5, **dadurch gekennzeichnet, dass** ein Grenzkraftschlussbeiwert ermittelt wird, der sich aus dem Gesamtkraftschlussbeiwert abzüglich eines festgelegten Pufferwerts ergibt.

7. Verfahren nach einem der vorhergehenden Ansprüche, **dadurch gekennzeichnet, dass** eine notwendige Bedingung für die Umschaltung von der Allradbetriebsweise in die Zweiradbetriebsweise darin besteht, dass gleichzeitig sowohl an der Triebachse (3) als auch an der Lenktriebachse (4) zumindest über einen Messzeitraum hinweg jeweils ein Schlupfwert ermittelt wird, der unterhalb eines jeweils festgelegten, vorzugsweise desselben, Schlupfgrenzwerts liegt.

8. Verfahren nach Anspruch 7, **dadurch gekennzeichnet, dass** der Schlupfgrenzwert an der Triebachse (3) und/oder an der Lenktriebachse (4) zwischen 14 % und 6 %, vorzugsweise zwischen 12 % und 8 %, weiter vorzugsweise 10 %, beträgt.

9. Verfahren nach Anspruch 7 oder 8, **dadurch gekennzeichnet, dass** der Schlupfgrenzwert für die Triebachse (3) definiert ist als Schlupfdifferenzwert zwischen der Triebachse (3) und der Lenktriebachse (4), wobei gilt:

$$S_{TA\text{-}LTA} = (u_{TA} - u_{LTA}) / u_{TA}$$

mit:

     $u_{TA}$ = Umfangsgeschwindigkeit an der Triebachse 3
     $u_{LTA}$ = Umfangsgeschwindigkeit an der Lenktriebachse 4

10. Verfahren nach einem der Ansprüche 7 bis 9, **dadurch gekennzeichnet, dass** der Schlupfgrenzwert für die Lenktriebachse (4) definiert ist als Schlupfdifferenzwert zwischen der Lenktriebachse (4) und der Triebachse (3), wobei gilt:

$$S_{LTA\text{-}TA} = (u_{LTA} - u_{TA}) / u_{LTA}$$

mit:

     $u_{TA}$ = Umfangsgeschwindigkeit an der Triebachse 3
     $u_{LTA}$ = Umfangsgeschwindigkeit an der Lenktriebachse 4

11. Verfahren nach Anspruch 6 und einem der Ansprüche 7 bis 10, **dadurch gekennzeichnet, dass** eine notwendige Bedingung für die Umschaltung von der Allradbetriebsweise in die Zweiradbetriebsweise darin besteht, dass ein aktueller Gesamtkraftschlussbeiwert kleiner ist als der Grenzkraftschlussbeiwert, wobei der aktuelle Gesamtkraftschlussbeiwert sich aus einem Verhältnis einer zumindest über einen Messzeitraum gemessenen gesamten Antriebskraft zu einer zumindest über einen Messzeitraum an der Triebachse (3) wirkenden Normalkraft ergibt.

12. Verfahren nach einem der vorhergehenden Ansprüche, **dadurch gekennzeichnet, dass** bei Betrieb der Erntemaschine (1) in der Allradbetriebsweise eine hinreichende Bedingung für eine Vergrößerung eines Anteils der Antriebskraft, der auf die Lenktriebachse (4) verteilt wird, darin besteht, dass zumindest über einen Messzeitraum hinweg an der Triebachse (3) ein Schlupfwert ermittelt wird, der oberhalb eines zuvor festgelegten Schlupfgrenzwerts liegt.

13. Verfahren nach Anspruch 12, **dadurch gekennzeichnet, dass** der Schlupfgrenzwert zwischen 2 % und 6 %, vorzugsweise zwischen 3 % und 5 %, weiter vorzugsweise 4 %, beträgt.

14. Verfahren nach einem der vorhergehenden Ansprüche, **dadurch gekennzeichnet, dass** bei Betrieb der Erntemaschine (1) in der Allradbetriebsweise eine hinreichende Bedingung für eine Verkleinerung eines Anteils der Antriebskraft, der auf die Lenktriebachse (4) verteilt wird, darin besteht, dass zumindest über einen Messzeitraum hinweg an der Lenktriebachse (4) ein Schlupfwert ermittelt wird, der oberhalb eines zuvor festgelegten Schlupfgrenzwerts liegt.

15. Verfahren nach Anspruch 14, **dadurch gekennzeichnet, dass** der Schlupfgrenzwert zwischen 2 % und 6 %, vorzugsweise zwischen 3 % und 5 %, weiter vorzugsweise 4 %, beträgt.

**Claims**

1. A method for operating a self-propelled harvester (1), the harvester (1) comprising

     - a prime mover (2) for providing a driving force,
     - a front drive axle (3),
     - a rear steering drive axle (4),
     - a force distribution device (5) for distributing the driving force to the drive axle (3) and the steering drive axle and (4)
     - means (6) for determining slip values on the drive axle (3) and the steering drive axle (4),
     wherein the driving force is distributed by means of the force distribution device (5) permanently at least in part to the drive axle (3) and at least temporarily at least in part to the steering drive axle (4),
     comprising the following process steps:

         - during two-wheel drive mode, the driving force is distributed exclusively to the drive axle (3);
         - during all-wheel drive mode, the driving force is distributed partly to the drive axle (3) and partly to the steering drive axle (4);

**characterised by** the following process steps:

- switching between two-wheel drive mode and all-wheel drive mode takes place automatically depending on the slip values on the drive axle (3) and/or the steering drive axle (4);
- during all-wheel drive mode, the distribution of the driving force to the drive axle (3) and the steering drive axle (4) is automatically controlled depending on the slip values on the drive axle (3) and/or the steering drive axle (4).

2. Method according to claim 1, **characterised in that** in a start-up situation in which the harvester (1) accelerates from a standstill, the harvester (1) is operated at least initially in two-wheel mode.

3. Method according to one of the preceding claims, **characterised in that** a sufficient condition for switching from the two-wheel drive mode to the four-wheel drive mode is that a slip value is determined at the drive axle (3) and/or at the steering drive axle (4) over a measurement period which is above a slip limit value.

4. Method according to claim 3, **characterised in that** the slip limit value is between 4 % and 8 %, preferably between 5 % and 7 %, more preferably 6 %.

5. Method according to claim 3 or 4, **characterised in that**, when switching to the all-wheel drive mode, a total force coefficient is determined which results from the ratio of the total drive force at the moment of switching to a normal force acting on the drive axle (3) at the moment of switching.

6. Method according to claim 5, **characterised in that** a limit force coefficient is determined, which results from the total force coefficient minus a fixed buffer value.

7. Method according to one of the preceding claims, **characterised in that** a necessary condition for switching from the all-wheel drive mode to the two-wheel drive mode is that a slip value is determined simultaneously both on the drive axle (3) and on the steering drive axle (4), at least over a measurement period, which is below a respectively defined, preferably the same, slip limit value.

8. Method according to claim 7, **characterised in that** the slip limit value on the drive axle (3) and/or on the steering drive axle (4) is between 14 % and 6 %, preferably between 12 % and 8 %, more preferably 10 %.

9. Method according to claim 7 or 8, **characterised in that** the slip limit value for the drive axle (3) is defined as the slip difference value between the drive axle (3) and the steering drive axle (4), wherein the following applies:

$$S_{LTA\text{-}TA} = (u_{TA} - u_{LTA}) / u_{TA}$$

with:

$u_{TA}$ = circumferential speed at the drive axle 3
$u_{LTA}$ = circumferential speed at the steering drive axle 4

10. Method according to one of claims 7 to 9, **characterised in that** the slip limit value for the steering drive axle (4) is defined as the slip difference value between the steering drive axle (4) and the drive axle (3), wherein the following applies:

$$S_{LTA\text{-}TA} = (u_{LTA} - u_{TA}) / u_{LTA}$$

with:

$u_{TA}$ = peripheral speed at the drive axle 3
$u_{LTA}$ = circumferential speed at the steering drive axle 4

11. Method according to claim 6 and one of claims 7 to 10, **characterised in that** a necessary condition for switching from the all-wheel drive mode to the two-wheel drive mode is that an actual total force coefficient is smaller than the limit force coefficient, wherein the actual total force coefficient results from a ratio of a total driving force measured over at least one measuring period to a normal force acting on the drive axle (3) over at least one measuring period.

12. Method according to one of the preceding claims, **characterised in that**, when the harvester (1) is operated in the all-wheel drive mode, a sufficient condition for increasing a proportion of the driving force which is distributed to the steering drive axle (4) is that a slip value which is above a previously defined slip limit value is determined at the drive axle (3) at least over a measurement period.

13. Method according to claim 12, **characterised in that** the slip limit value is between 2 % and 6 %, preferably between 3 % and 5 %, more preferably 4 %.

14. Method according to one of the preceding claims, **characterised in that**, when the harvester (1) is operated in the all-wheel drive mode, a sufficient condition for a reduction in a proportion of the driving force which is distributed to the steering drive axle (4) is that a slip value is determined at the steering drive axle (4) at least over a measurement period which is above a previously defined slip limit value.

15. Method according to claim 14, **characterised in that** the slip limit value is between 2 % and 6 %, preferably between 3 % and 5 %, more preferably 4 %.

## Revendications

1. Procédé pour faire fonctionner une machine de récolte automotrice (1), la machine de récolte (1) comprenant

    - un moteur d'entraînement (2) destiné à fournir une force d'entraînement,
    - un essieu moteur (3) avant,
    - un essieu moteur de direction (4) arrière,
    - un dispositif de répartition de force (5) destiné à répartir la force d'entraînement sur l'essieu moteur (3) et l'essieu moteur de direction, ainsi que (4)
    - des moyens (6) destinés à déterminer de valeurs de patinage sur l'essieu moteur (3) et l'essieu moteur de direction (4),
    la force d'entraînement étant répartie de manière permanente à l'aide du dispositif de répartition de force (5), au moins en partie sur l'essieu moteur (3) et au moins temporairement au moins en partie sur l'essieu moteur de direction (4), comprenant les étapes de procédé suivantes :

        - au cours d'un mode de fonctionnement à deux roues, la force d'entraînement est répartie exclusivement sur l'essieu moteur (3),
        - au cours d'un mode de fonctionnement toutes roues, la force d'entraînement est répartie en partie sur l'essieu moteur (3) et en partie sur l'essieu moteur de direction (4) ;

        **caractérisé en ce qu'**il comporte les étapes de procédé suivantes :

        - une commutation entre le mode de fonctionnement à deux roues et le mode de fonctionnement toutes roues s'effectue automatiquement en fonction de valeurs de patinage sur l'essieu moteur (3) et/ou l'essieu moteur de direction (4) ;
        - au cours du mode de fonctionnement toutes roues, la répartition de la force d'entraînement sur l'essieu moteur (3) et l'essieu moteur de direction (4) est régulée de manière automatisée en fonction de valeurs de patinage sur l'essieu moteur (3) et/ou l'essieu moteur de direction (4).

2. Procédé selon la revendication 1, **caractérisé en ce que** dans une situation de démarrage dans laquelle la machine de récolte (1) accélère à partir de l'arrêt, la machine de récolte (1) est exploitée au moins initialement en mode de fonctionnement à deux roues.

3. Procédé selon l'une des revendications précédentes, **caractérisé en ce qu'**une condition suffisante pour la commutation du mode de fonctionnement à deux roues au mode de fonctionnement toutes roues réside dans le fait que l'on détermine, pendant une période de mesure, une valeur de patinage sur l'essieu moteur (3) et/ou l'essieu moteur de direction (4), qui est supérieure à une valeur limite de patinage.

4. Procédé selon la revendication 3, **caractérisé en ce que** la valeur limite de patinage est comprise entre 4 % et 8 %, de préférence entre 5 % et 7 %, et est notamment de préférence de 6 %.

5. Procédé selon la revendication 3 ou 4, **caractérisé en ce qu'**en cas de commutation au mode de fonctionnement toutes roues, on détermine un coefficient d'adhérence total qui résulte du rapport entre la force d'entraînement totale à l'instant de la commutation et une force normale agissant sur l'essieu moteur (3) à l'instant de la commutation.

6. Procédé selon la revendication 5, **caractérisé en ce que** l'on détermine un coefficient d'adhérence limite qui résulte du coefficient d'adhérence total déduction faite d'une valeur tampon définie.

7. Procédé selon l'une des revendications précédentes, **caractérisé en ce qu'**une condition nécessaire à la commutation du mode de fonctionnement toutes roues au mode de fonctionnement à deux roues réside dans le fait que l'on détermine simultanément, aussi bien sur l'essieu moteur (3) que sur l'essieu moteur de direction (4), au moins pendant une période de mesure, respectivement une valeur de patinage qui est inférieure à une valeur limite de patinage définie, de préférence de la même valeur.

8. Procédé selon la revendication 7, **caractérisé en ce que** la valeur limite de patinage sur l'essieu moteur (3) et/ou l'essieu moteur de direction (4) est comprise entre 14 % et 6 %, de préférence entre 12 % et 8 %, et est notamment de préférence de 10 %.

9. Procédé selon la revendication 7 ou 8, **caractérisé en ce que** la valeur limite de patinage pour l'essieu moteur (3) est définie comme valeur différentielle de patinage entre l'essieu moteur (3) et l'essieu moteur de direction (4), sachant que

$$S_{TA\text{-}LTA} = (U_{TA} - U_{LTA}) / U_{TA}$$

avec

$U_{TA}$ = vitesse périphérique sur l'essieu moteur 3
$U_{LTA}$ = vitesse périphérique sur l'essieu moteur de direction 4.

10. Procédé selon l'une des revendications 7 à 9, **caractérisé en ce que** la valeur limite de patinage pour l'essieu moteur de direction (4) est définie comme valeur différentielle de patinage entre l'essieu moteur de direction (4) et l'essieu moteur (3), sachant que

$$S_{LTA\text{-}TA} = (U_{LTA} - U_{TA}) / U_{LTA}$$

avec

$U_{TA}$ = vitesse périphérique sur l'essieu moteur 3
$U_{LTA}$ = vitesse périphérique sur l'essieu moteur de direction 4.

11. Procédé selon la revendication 6 et l'une des revendications 7 à 10, **caractérisé en ce qu'**une condition nécessaire à la commutation du mode de fonctionnement toutes roues au mode de fonctionnement à deux roues réside dans le fait qu'un coefficient d'adhérence total actuel est inférieur au coefficient d'adhérence limite, le coefficient d'adhérence total actuel résultant du rapport entre une force d'entraînement totale, mesurée au moins pendant une période de mesure, et une force normale agissant sur l'essieu moteur (3) au moins pendant une période de mesure.

12. Procédé selon l'une des revendications précédentes, **caractérisé en ce que** lors du fonctionnement de la machine de récolte (1) en mode toutes roues, une condition suffisante pour une augmentation d'une proportion de la force d'entraînement répartie sur l'essieu moteur de direction (4) réside dans le fait que l'on détermine sur l'essieu moteur (3), au moins pendant une période de mesure, une valeur de patinage qui est supérieure à une valeur limite de patinage préalablement définie.

13. Procédé selon la revendication 12, **caractérisé en ce que** la valeur limite de patinage est comprise entre 2 % et 6 %, de préférence entre 3 % et 5 %, et est notamment de préférence de 4 %.

14. Procédé selon l'une des revendications précédentes, **caractérisé en ce que** lors du fonctionnement de la machine de récolte (1) en mode toutes roues, une condition suffisante pour une réduction d'une proportion de la force d'entraînement répartie sur l'essieu moteur de direction (4) réside dans le fait que l'on détermine sur l'essieu moteur de direction (4), au moins pendant une période de mesure, une valeur de patinage qui est supérieure à une valeur limite de patinage préalablement définie.

15. Procédé selon la revendication 14, **caractérisé en ce que** la valeur limite de patinage est comprise entre 2 % et 6 %, de préférence entre 3 % et 5 %, et est notamment de préférence de 4 %.

1

7    9    3    8    4    10

# Fig. 1

Fig. 2

| Allrad AUS | | Allrad EIN | |
|---|---|---|---|
| $S_{TA} >= 6\%$ ja | $\mu_{Grenz}=\mu_{ges}-x$ → $S_{TA} >= 6\%$ ↰ ja | If t = 1s → $\mu_{ges} < \mu_{Grenz}$ $S_{TA-LTA} < 10\%$ und $S_{LTA-TA} < 10\%$ ↰ ja | If t = 1s |
| Anfahren ja | | | |
| Allrad AUS | | | |

# Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19647507 A1
- DE 102007030168 A1
- US 2020122730 A1